# FASCICULE DE BREVET EUROPEEN

(11) **EP 3 519 679 B1**
(45) Date de publication et mention de la délivrance du brevet: **20.05.2020**
(21) Numéro de dépôt: 17787225.6
(22) Date de dépôt: 28.09.2017
(51) Int. Cl.: F01D 5/18

(54) **AUBE DE TURBINE COMPORTANT UN CIRCUIT DE REFROIDISSEMENT**
TURBINENSCHAUFEL MIT EINEM KÜHLKANAL
TURBINE BLADE COMPRISING A COOLING CHANNEL

(30) Priorité: 29.09.2016 FR 1601421
(43) Date de publication de la demande: 07.08.2019
(73) Titulaire: Safran, 75015 Paris (FR)
(72) Inventeur: ROLLINGER, Adrien, Bernard, Vincent, 77550 Moissy-Crayamel Cedex (FR); CARIOU, Romain, Pierre, 77550 Moissy-Crayamel Cedex (FR); FLAMME, Thomas, Michel, 77550 Moissy-Crayamel Cedex (FR); PAQUIN, Sylvain, 77550 Moissy-Crayamel Cedex (FR)
(74) Mandataire: Cabinet Beau de Loménie
(86) Numéro de dépôt international: PCT/FR2017/052636
(87) Numéro de publication internationale: WO 2018/060627

(56) Documents cités:
- EP-A1- 2 899 370
- WO-A1-2015/171145
- WO-A1-2015/181488
- US-A1- 2009 175 733
- US-A1- 2014 199 177

## Description

### DOMAINE DE L'INVENTION

La présente invention concerne le domaine des aubes de turbines à gaz haute pression aéronautique, Plus particulièrement le circuit de refroidissement de ces aubes, et une turbine à gaz comportant de telles aubes.

### ETAT DE LA TECHNIQUE ANTERIEURE

Les aubes mobiles d'une turbine à gaz d'un moteur d'avion, et notamment de la turbine haute-pression, sont soumises aux températures très élevées des gaz de combustion pendant le fonctionnement du moteur. Ces températures atteignent des valeurs largement supérieures à celles que peuvent supporter sans dommages les différentes pièces qui sont en contact avec ces gaz, ce qui a pour conséquence de limiter leur durée de vie.

Par ailleurs, une élévation de la température des gaz de la turbine haute-pression permet d'améliorer le rendement d'un moteur, donc le rapport entre la poussée du moteur et le poids d'un avion propulsé par ce moteur. Par conséquent, des efforts sont entrepris afin de réaliser des aubes de turbine qui peuvent résister à des températures de plus en plus élevées, et afin d'optimiser le refroidissement de ces aubes.

Il est ainsi connu de munir ces aubes de circuits de refroidissement visant à réduire la température de ces dernières. Grâce à de tels circuits, de l'air de refroidissement (ou air «froid»), qui est généralement introduit dans l'aube par son pied, traverse celle-ci en suivant un trajet formé par des cavités pratiquées dans l'épaisseur de l'aube avant d'être éjecté par des orifices s'ouvrant à la surface de l'aube.

De tels circuits de refroidissement sont dits « avancés » quand ils sont composés de plusieurs cavités indépendantes dans l'épaisseur de l'aube, ou quand certaines de ces cavités sont dédiées au refroidissement localisé. Ces cavités permettent de définir une aube compatible avec les exigences de performance des moteurs et de durée de vie des pièces.

Toutefois, les circuits de refroidissement puisent l'air «froid» dans la veine primaire du moteur, de sorte que la température de cet air froid, agissant comme un fluide caloporteur, soit inférieure à la température de l'air s'écoulant à la surface de l'aube, dit « air chaud ». Cet air prélevé dans la veine primaire du moteur constitue donc une perte et dégrade le rendement et les performances globales du moteur.

Par ailleurs, les circuits avancés présentent l'inconvénient d'engendrer une grande différence de température entre les parois externes de l'aube au contact de la veine et les parois au cœur de l'aube. Ces différences de températures importantes induisent des contraintes pouvant mettre en péril la tenue mécanique de l'aube en fonctionnement et ainsi minimiser sa durée de vie.

US 2009/175733 A1 divulgue une aube de turbine aéronautique selon la préambule de la revendication 1 comportant des circuits de refroidissement. Des autres circuits de refroidissement de l'art antérieur sont divulgués par EP 2899370 A1, WO 2015/181488 A1, WO 2015/171145 A1 et US 2014/199177 A1.

Il existe donc un besoin pour un circuit de refroidissement d'aube de turbine à gaz aéronautique, permettant de minimiser les gradients thermiques afin de limiter les contraintes mécaniques internes, et d'optimiser le refroidissement de l'aube en diminuant le débit d'air utilisé pour la refroidir, améliorant par conséquent le rendement global de la turbine.

### PRESENTATION DE L'INVENTION

Le présent exposé concerne une aube de turbine aéronautique s'étendant dans la direction radiale et présentant un intrados et un extrados, comportant une pluralité de cavités d'intrados s'étendant radialement du côté intrados de l'aube, une pluralité de cavités d'extrados s'étendant radialement du côté extrados de l'aube, et au moins une cavité centrale située dans la partie centrale de l'aube et entourée par des cavités d'intrados et des cavités d'extrados, l'aube comportant également une pluralité de circuits de refroidissement, dans laquelle au moins un premier circuit de refroidissement comporte :
une première cavité et une deuxième cavité, la première et la deuxième cavité communiquant entre elles au niveau d'une extrémité radiale interne et d'une extrémité radiale externe de l'aube,
une troisième cavité communiquant avec la deuxième cavité au niveau de l'extrémité radiale externe,
une quatrième cavité communiquant avec la troisième cavité au niveau de l'extrémité radiale interne,
la première cavité et la deuxième cavité étant configurées pour être alimentée conjointement en air froid par une ouverture commune d'admission d'air au niveau de l'extrémité radiale interne, et pour que l'air s'y écoule dans un même sens selon la direction radiale,
la première cavité étant une cavité d'intrados, la deuxième cavité étant une cavité centrale, la troisième cavité et la quatrième cavité étant des cavités d'extrados.

Dans le présent exposé, par direction radiale, on comprend la direction s'étendant du pied d'aube, c'est-à-dire la base de l'aube, à la tête d'aube, c'est-à-dire l'extrémité radialement opposée au pied de l'aube. Ainsi, dans le présent exposé, l'extrémité radiale interne désigne le pied d'aube, et l'extrémité radiale externe désigne la tête d'aube.

Par ailleurs, dans le présent exposé, on entend par « sens montant », le sens d'écoulement d'air dans une cavité du pied d'aube vers la tête d'aube, et par « sens descendant », le sens d'écoulement d'air dans une cavité de la tête d'aube vers le pied d'aube.

Chaque cavité est délimitée par une paroi. Les cavités d'intrados s'étendent radialement, c'est-à-dire du pied d'aube à la tête d'aube, du côté de l'intrados de l'aube. En d'autres termes, une face d'au moins une partie de la paroi délimitant chaque cavité d'intrados est en contact avec l'air extérieur à l'aube du côté intrados. Aucune face de la paroi délimitant chaque cavité d'intrados n'est en contact avec l'air extérieur à l'aube du côté extrados.

De même, les cavités d'extrados s'étendent radialement, c'est-à-dire du pied d'aube à la tête d'aube, du côté de l'extrados de l'aube. En d'autres termes, une face d'au moins une partie de la paroi délimitant chaque cavité d'extrados est en contact avec l'air extérieur à l'aube du côté extrados. Aucune face de la paroi délimitant chaque cavité d'extrados n'est en contact avec l'air extérieur à l'aube du côté intrados.

La cavité centrale s'étend également radialement, c'est-à-dire du pied d'aube à la tête d'aube, dans la partie centrale de l'aube. Par partie centrale de l'aube, on comprend qu'aucune face de la paroi délimitant la cavité centrale n'est en contact avec l'air extérieur à l'aube. En d'autres termes, la paroi délimitant la cavité centrale est en contact soit avec une ou des cavité(s) d'intrados et avec une ou des cavité(s) d'extrados, à l'exception des parois délimitant lesdites cavités d'intrados et d'extrados.

Un circuit de refroidissement désigne une pluralité de cavités communiquant entre elles. Dans le présent exposé, au moins un circuit de refroidissement comporte une première, une deuxième, une troisième et une quatrième cavité.

La première et la deuxième cavité communiquent entre elle au niveau du pied de l'aube de sorte à former une première chambre commune, et sont alimentées simultanément en air froid au niveau de cette première chambre commune. Les première et deuxième cavités sont ensuite isolées l'une de l'autre par une paroi s'étendant dans la direction radiale, et communiquent à nouveau entre elles au niveau de la tête d'aube de sorte à former une deuxième chambre commune.

Ainsi, lorsque l'air froid est alimenté dans la première chambre commune, ce dernier se divise entre la première cavité et la deuxième cavité en s'écoulant, dans chacune de ces deux cavités, dans le sens montant.

La première cavité est une cavité d'intrados. Par conséquent, lorsque l'air froid s'écoule dans la première cavité, celui-ci échange de la chaleur par convection forcée avec la paroi séparant la première cavité de l'air chaud côté intrados. Ainsi, l'air s'écoulant dans le sens montant dans la première cavité absorbe la chaleur de la paroi en se réchauffant à mesure qu'il se rapproche de la tête d'aube.

La deuxième cavité est une cavité centrale. Par conséquent, l'air froid s'écoulant dans cette cavité n'échange pas de chaleur avec l'air chaud à l'extérieur de l'aube. Ainsi, l'air s'écoulant dans le sens montant dans la deuxième cavité, parallèlement à l'air s'écoulant dans la première cavité, se réchauffe très peu à mesure qu'il se rapproche de la tête d'aube. De l'air froid peut ainsi atteindre la deuxième chambre commune, en se mélangeant avec l'air provenant de la première cavité.

La troisième cavité communique avec la deuxième cavité au niveau de la tête d'aube, et avec la quatrième cavité au niveau de la tête d'aube. L'air provenant des première et deuxième cavités s'écoule alors dans la troisième cavité dans le sens descendant, puis dans la quatrième cavité dans le sens montant.

Par conséquent, les troisième et quatrième cavités, étant des cavités d'extrados, peuvent être alimentées par un air froid provenant de la deuxième cavité, améliorant ainsi le refroidissement côté extrados.

Cette configuration présente également l'avantage de cibler le refroidissement sur les zones souhaitées. En effet, l'air se déplaçant au sein des cavités subit la force de Coriolis liée à la rotation rapide de l'aube. Cela permet de plaquer au maximum l'air froid contre les parois externes, c'est-à-dire les parois définissant l'intrados et l'extrados de l'aube, constituant les zones les plus chaudes. Les échanges de chaleur sont ainsi optimisés au niveau des parois externes, cela permettant en outre d'améliorer l'homogénéité des températures au cœur de l'aube, de minimiser les gradients thermiques au cœur de l'aube, et donc de limiter les contraintes internes dans les parois formant les cavités, améliorant ainsi la tenue mécanique de celle-ci. En outre, la deuxième cavité, agissant comme un cœur mécaniquement flexible, permet d'absorber les contraintes mécaniques engendrées par la dilatation thermique des parois externes au contact de l'air chaud.

Dans certains modes de réalisation, l'aube comporte une pluralité d'orifices d'intrados, chacun communiquant avec la première cavité et débouchant sur l'intrados de l'aube.

Ces orifices d'intrados peuvent être des perçages réalisés dans la paroi séparant la première cavité et l'intrados de l'aube et répartis dans la direction radiale sur au moins une partie de la première cavité, permettant à un certain volume d'air froid s'écoulant dans le sens montant dans la première cavité d'être évacué sur l'intrados de l'aube.

Cet air évacué permet de refroidir davantage la face externe de la paroi d'intrados, en générant un film de refroidissement sur l'intrados de l'aube. En outre, l'air circulant dans la première cavité se réchauffe petit à petit dans le sens montant, comme décrit précédemment. Ces orifices d'intrados permettent d'évacuer à l'extérieur de la première cavité une grande partie de l'air réchauffé. Par conséquent, l'air alimentant la troisième cavité, provenant des première et deuxième cavités, est constitué majoritairement de l'air froid issu de la deuxième cavité. Cela permet d'améliorer le refroidissement des cavités d'extrados, c'est-à-dire la troisième et la quatrième cavité.

Dans certains modes de réalisation, l'aube comporte une pluralité d'orifices d'extrados, chacun communiquant avec la quatrième cavité et débouchant sur l'extrados de l'aube.

Ces orifices d'extrados peuvent être des perçages réalisés dans la paroi séparant la quatrième cavité et l'extrados de l'aube et répartis dans la direction radiale sur au moins une partie de la quatrième cavité, permettant à un certain volume d'air s'écoulant dans le sens montant dans la quatrième cavité d'être évacué sur l'extrados de l'aube.

Cet air évacué permet de refroidir davantage la face externe de la paroi d'extrados, en générant un film de refroidissement sur l'extrados de l'aube. En outre, ces orifices d'extrados permettent d'entraîner l'air le long du circuit de refroidissement. En effet, la pression côté extrados étant très inférieure à la pression d'alimentation des circuits de refroidissement, la présence de ces orifices permet de créer naturellement un écoulement d'air dans le circuit de refroidissement.

Dans certains modes de réalisation, l'aube comporte au moins un deuxième circuit de refroidissement comprenant deux cavités d'intrados communiquant entre elles par une pluralité de passages répartis dans la direction radiale le long de l'aube entre ces deux cavités, une de ces deux cavités étant alimentée en air froid par une ouverture d'admission d'air au niveau de l'extrémité radiale interne de l'aube.

La cavité qui est alimentée en air froid peut également communiquer avec l'intrados de l'aube via des orifices répartis dans la direction radiale sur au moins une partie de ladite cavité. Ainsi, lorsque l'air froid s'écoule dans cette cavité, celui-ci échange de la chaleur par convection forcée avec la paroi séparant cette cavité de l'air chaud côté intrados, et est également évacué par les orifices, générant un film de refroidissement sur l'intrados de l'aube, tout en pénétrant également dans l'autre cavité via la pluralité de passages.

Dans certains modes de réalisation, l'aube comporte au moins un troisième circuit de refroidissement comprenant une cavité d'extrados et une cavité de bord de fuite s'étendant radialement à la fois du côté extrados et du côté intrados de l'aube au niveau du bord de fuite, les deux cavités étant alimentées en air froid par une ouverture d'admission d'air au niveau de l'extrémité radiale interne de l'aube, la cavité d'extrados formant un angle au niveau de l'extrémité radiale externe de l'aube, de sorte à s'étendre jusqu'au bord de fuite de l'aube.

Dans certains modes de réalisation, les cavités du troisième circuit de refroidissement communiquent avec une pluralité d'orifices de bord de fuite débouchant sur la face d'intrados de l'aube.

Dans certains modes de réalisation, la pluralité de circuits de refroidissement sont indépendants les uns des autres.

Par indépendants les uns des autres, on comprend qu'aucune des cavités composant un circuit de refroidissement donné ne communique avec une cavité d'un autre circuit de refroidissement. Cela permet, pour chaque circuit de refroidissement, de produire un refroidissement ciblé sur des zones précises de l'aube, sans que ces circuits n'interfèrent entre eux.

Dans certains modes de réalisation, l'aube comporte moins de deux cavités fines, les cavités fines ayant une première longueur supérieure ou égale à au moins sept fois une deuxième longueur dans une section perpendiculaire à la direction radiale.

Dans certains modes de réalisation, l'épaisseur de chaque cavité fine est inférieure ou égale à 1,2 mm, l'épaisseur étant la distance entre deux côtés de la cavité fine selon la première longueur, dans une section perpendiculaire à la direction radiale.

Dans certains modes de réalisation, chaque cavité fine s'étend sur au moins la moitié de l'aube selon la direction radiale.

Dans certains modes de réalisation, l'aube comporte au plus une cavité fine.

La présence d'un nombre limité de cavités fines facilite le processus de fabrication des aubes. En effet, les noyaux céramiques nécessaires à l'élaboration des circuits de refroidissement sont très fragiles du fait de leur géométrie liée à la faible épaisseur des cavités fines. La minimisation du nombre de ces cavités fines permet de pallier ces inconvénients.

Le présent exposé concerne également une turbine à gaz comportant des aubes du présent exposé.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente une vue en perspective d'une aube de turbine selon la présente invention ;
- la figure 2 est une vue en perspective représentant symboliquement les cavités des différents circuits de refroidissement de l'aube ;
- la figure 3 est une vue en perspective représentant symboliquement les cavités du premier circuit de refroidissement de l'aube
- les figures 4A à 4E représentent des sections transversales telles qu'indiquées sur la figure 3 pour différentes position dans la direction radiale depuis le pied d'aube jusqu'à la tête d'aube ;
- la figure 5 représente une section transversale de l'aube, illustrant les zones où les transferts thermiques sont les plus importants.

### DESCRIPTION DETAILLEE D'EXEMPLES DE REALISATION

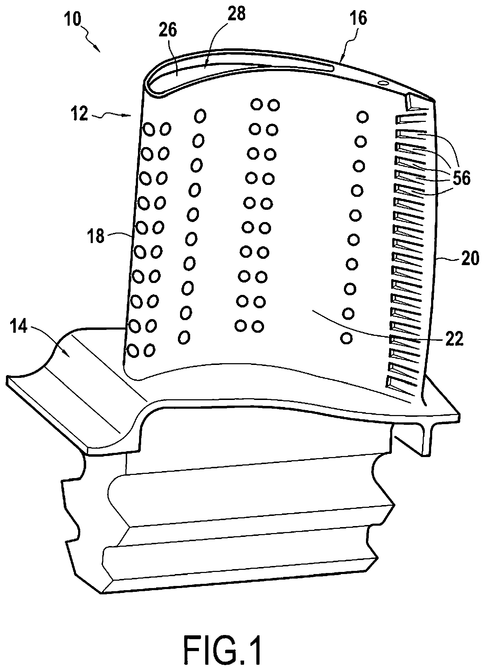

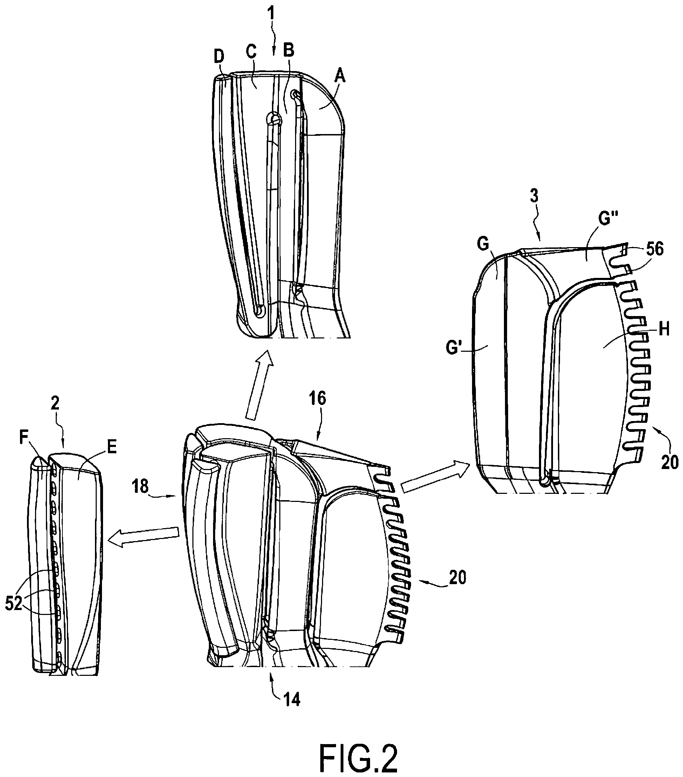

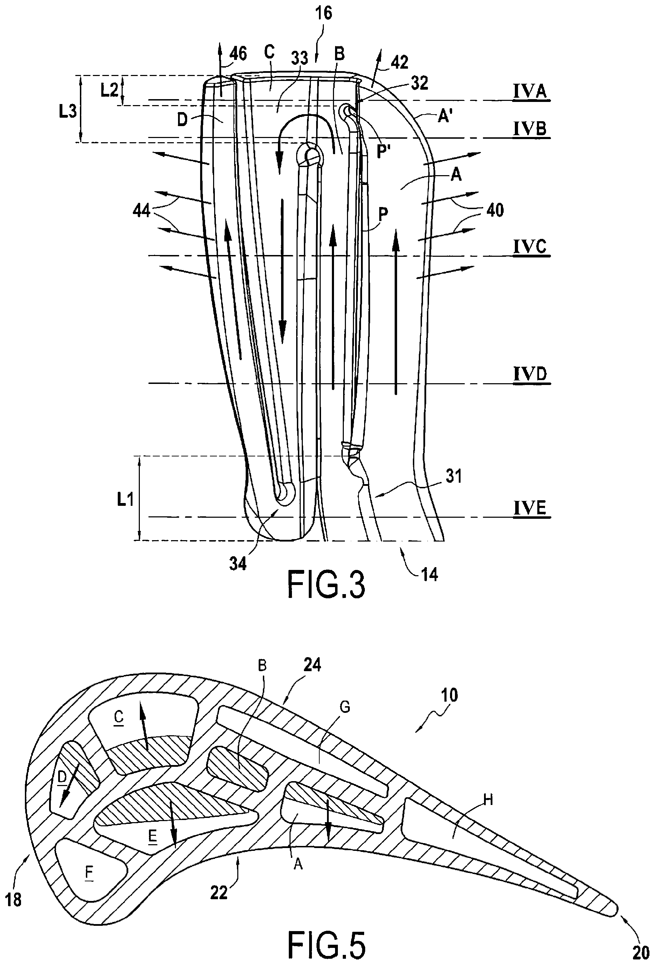

On décrit ci-après l'invention en références aux figures 1 à 5. On note que les figures 2 et 3 ne représentent pas des parties de l'aube en tant que telles, mais représentent les cavités de l'aube. En d'autres termes, les lignes illustrées sur les figures 2 et 3 symbolisent les parois internes de l'aube délimitant ces cavités.

La figure 1 illustre une aube mobile 10, par exemple métallique, d'une turbine haute-pression de turbomachine. Bien entendu, la présente invention peut également s'appliquer à d'autres aubes mobiles ou fixes de la turbomachine.

L'aube 10 comporte une surface aérodynamique 12 (ou pale) qui s'étend radialement entre un pied d'aube 14 et une tête d'aube 16.

Le pied d'aube 14 est adapté pour être monté sur un disque du rotor de la turbine haute-pression, la tête d'aube 16 étant opposée radialement au pied d'aube 14.

La surface aérodynamique 12 présente quatre zones distinctes : un bord d'attaque 18 disposé en regard de l'écoulement des gaz chauds issus de la chambre de combustion de la turbomachine, un bord de fuite 20 opposé au bord d'attaque 18, une face latérale intrados 22 et une face latérale extrados 24, ces faces latérales 22, 24 reliant le bord d'attaque 18 au bord de fuite 20.

Au niveau de la tête d'aube 16, la surface aérodynamique 12 de l'aube est fermée par une paroi transversale 26. Par ailleurs, la surface aérodynamique 12 s'étend radialement légèrement au-delà de cette paroi transversale 26 de façon à former une cuvette 28, dénommée ci-après baignoire de l'aube. Cette baignoire 28 possède donc un fond formé par la paroi transversale 26, un bord formé par la surface aérodynamique 12 et elle est ouverte vers la tête d'aube 16.

Selon l'exemple décrit, l'aube 10 comporte trois circuits de refroidissements, indépendants les uns des autres, destinées au refroidissement de l'aube : un premier circuit de refroidissement 1, un deuxième circuit de refroidissement 2, et un troisième circuit de refroidissement 3.

Le premier circuit de refroidissement 1 comporte une première cavité A, une deuxième cavité B, une troisième cavité C et une quatrième cavité D. La première cavité A est une cavité d'intrados, la deuxième cavité B est une cavité centrale, les troisième et quatrième cavités C et D sont des cavités d'extrados.

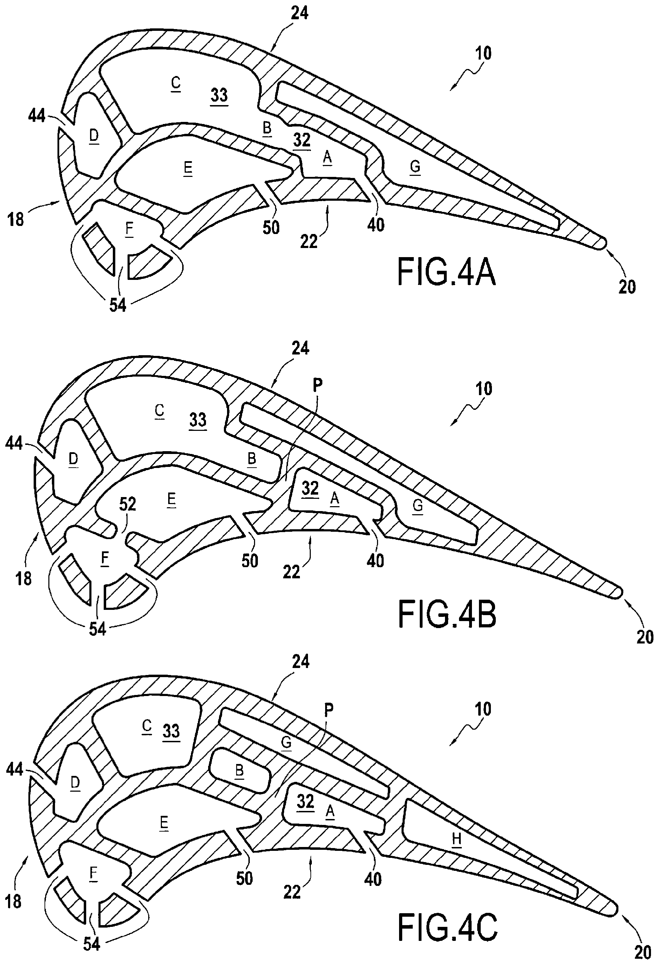

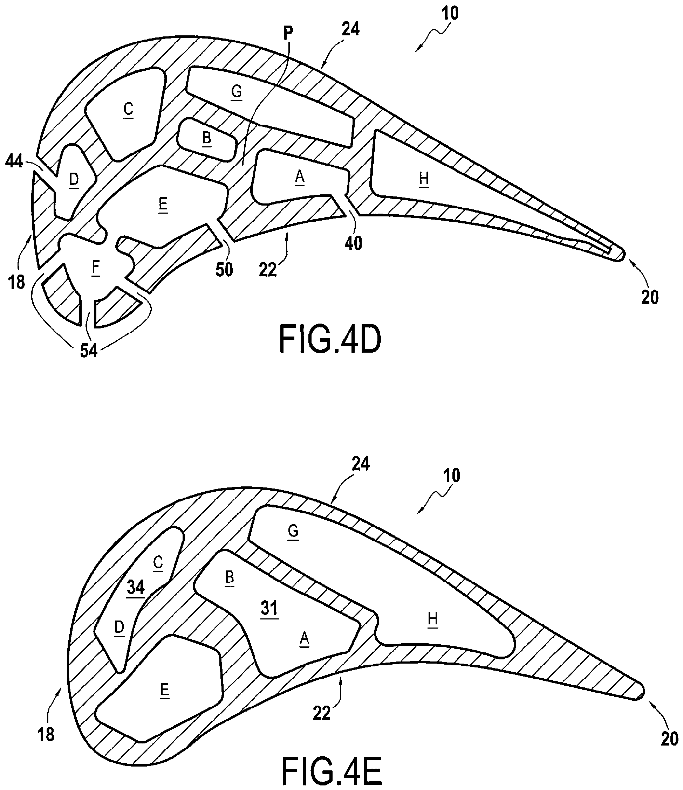

Le premier circuit de refroidissement est alimenté en air froid par les cavités A et B au niveau du pied d'aube 14. L'air froid est un air puisé dans d'autres circuits du moteur, plus froid que l'air s'écoulant sur les faces latérales d'intrados 22 et d'extrados 24, et agissant comme fluide caloporteur. Les première et deuxième cavités A et B communiquent entre elles au niveau du pied d'aube 14, dans les 40% inférieurs de l'aube, de préférence 25%, de préférence encore 10% dans la direction radiale, de sorte à former une première chambre commune 31 (figures 3 et 4E) s'étendant radialement depuis le pied d'aube 14 sur une longueur L1. La longueur L1 peut représenter au plus 40% de la longueur totale de l'aube. Les première et deuxième cavités A et B communiquent également entre elles au niveau de la tête d'aube 16, dans les 20% supérieurs de l'aube, de préférence 15%, de préférence encore 10% dans la direction radiale, de sorte à former une deuxième chambre commune 32 (figures 3 et 4A) s'étendant radialement sur une longueur L2. La longueur L2 peut représenter au plus 20% de la longueur totale de l'aube. Entre les chambres communes 31 et 32, les cavités A et B sont isolées l'une de l'autre par une paroi P s'étendant radialement le long de l'aube 10. Par conséquent, l'air provenant de la première chambre commune 31 s'écoule ensuite séparément et parallèlement dans le sens montant dans les cavités A et B (flèches sur la figure 3), jusqu'à la deuxième chambre commune 32.

Par ailleurs, la première cavité A communique avec la face d'intrados 22 de l'aube 10 via une pluralité d'orifices d'intrados 40, répartis radialement le long de l'aube 10. Ainsi, une partie de l'air circulant dans la première cavité A est évacuée par les orifices 40, de manière à créer un film de refroidissement sur la face d'intrados 22, ainsi que par un orifice de tête d'aube 42 située sur la tête d'aube, de manière à créer un film de refroidissement sur la paroi 26 de la baignoire 28. L'air circulant dans la première cavité A qui n'est pas évacué par les orifices 40 ou 42 se mélange avec l'air issu de la deuxième cavité B, dans la deuxième chambre commune 32.

De plus, la cavité A peut être délimitée, dans sa partie supérieure, par une paroi courbée A' s'étendant sur 20%, de préférence 15%, de préférence encore 10% de la longueur de l'aube dans la direction radiale, la courbure de la paroi A' étant dirigée vers le bord d'attaque 18. Cette forme courbée de la paroi permet de guider l'air s'écoulant dans la cavité A vers les cavités suivantes, et d'assurer une répartition homogène de l'air dans les cavités tout en limitant les pertes de charge. En outre, la paroi P séparant les cavités A et B peut comporter, dans sa partie supérieure, une partie courbée P', formant un angle par rapport au reste de la paroi P, de sorte que cette partie courbée P' soit dirigée vers le bord d'attaque 18. Cette partie courbée P' permet de guider l'air s'écoulant dans la cavité B vers la cavité C. La paroi courbée A' et la partie courbée P' permettent ainsi de faciliter le retournement de l'air provenant des cavités A et B vers la cavité C, c'est-à-dire de faciliter le changement de sens d'écoulement de l'air, passant d'un sens montant dans les cavités A et B à un sens descendant dans la cavité C. Cela permet en outre de limiter les pertes de charge au moment de ce retournement.

Les deuxième et troisième cavités B et C communiquent entre elles au niveau de la tête d'aube 16, dans les 20% supérieurs de l'aube, de préférence 15%, de préférence encore 10% dans la direction radiale, de sorte à former une troisième chambre commune 33 (figure 3 et 4B) s'étendant radialement sur une longueur L3. Les deuxième et troisième chambres 32 et 33 communiquent donc entre elles au niveau de la tête d'aube 16 (figures 3 et 4A), de sorte que la première cavité A peut également communiquer avec la troisième cavité C. L'air circulant dans la troisième cavité C provient donc des cavités A et B, et s'écoule dans le sens descendant.

La longueur L3 peut de préférence être supérieure à la longueur L2. Ainsi, l'air s'écoulant dans la troisième cavité C provient majoritairement de la deuxième cavité B. De plus, l'air provenant de la première cavité A a été évacué en grande partie par les orifices d'intrados 40 et l'orifice de tête d'aube 42. Plus précisément, au moins 75%, de préférence au moins 80%, de préférence encore au moins 85% de l'air s'écoulant dans la troisième cavité C provient de la deuxième cavité B. Cela présente l'avantage de conserver un air froid au sein de la troisième cavité C, de sorte à refroidir plus efficacement la face d'extrados 24 de l'aube. En effet, la deuxième cavité B étant une cavité centrale, l'air provenant de celle-ci est plus froid que l'air provenant de la première cavité A, ce dernier étant réchauffé par transferts thermiques, notamment par convection forcée, avec la face d'intrados 22.

Les troisième et quatrième cavités C et D communiquent entre elles au niveau du pied d'aube 14 dans les 10% inférieurs de l'aube, de préférence 8%, de préférence encore 6% dans la direction radiale, de sorte à former une quatrième chambre commune 34 (figure 3 et 4E). L'air circulant dans la quatrième cavité D provient donc de la troisième cavité C, et s'écoule dans le sens montant, c'est-à-dire depuis le pied d'aube 14 vers la tête d'aube 16. La quatrième cavité D communique avec l'extrados via une pluralité d'orifices d'extrados 44 répartis radialement le long de l'aube 10. Ainsi, une partie de l'air circulant dans la quatrième cavité D est évacuée par les orifices 44, de manière à créer un film de refroidissement sur la face d'extrados 24, ainsi que par un orifice de tête d'aube 46 située sur la tête d'aube 16, de manière à créer un film de refroidissement sur la paroi 26 de la baignoire 28.

Le premier circuit de refroidissement 1 s'étend ainsi de la face d'intrados 22, du côté du bord de fuite 20, jusqu'à la face d'extrados 24, du côté du bord d'attaque 18. Cette configuration permet d'exploiter les différents effets liés à la rotation rapide de l'aube 10, notamment la force de Coriolis, pour plaquer l'air aux endroits nécessitant une optimisation des transferts thermiques, notamment les parois délimitant les faces d'intrados ou d'extrados de l'intérieur de l'aube. Les zone hachurées sur la figure 5 indiquent les zones où le travail de l'air est minimisé, c'est-à-dire où les transferts thermiques sont les moins importants. Les flèches sur la figure 5 indiquent au contraire l'orientation de la force de Coriolis, en d'autres termes les zones où l'air est plaqué et où les transferts thermiques sont optimisés. Cette configuration permet ainsi de diminuer le débit d'air froid nécessaire pour refroidir l'aube 10, en ciblant les transferts thermiques sur les zones souhaitées.

La cavité centrale B agit ainsi comme un cœur mécaniquement flexible de l'aube. En effet, elle permet de compenser les déformations mécaniques dans les parois constituant l'aube 10 adjacentes aux faces d'intrados 22 et d'extrados 24, engendrées par les dilatations thermiques dues aux températures élevées sur ces faces. Cela permet ainsi de limiter les surcontraintes externes sur l'aube 10.

Le deuxième circuit de refroidissement 2, indépendant du premier circuit de refroidissement 1, comporte deux cavités d'intrados E et F. La cavité E, adjacente aux cavités A, B, C et D du premier circuit de refroidissement, est alimentée en air froid au niveau du pied d'aube 14 (figure 4E). La cavité F est située du côté du bord d'attaque 18 de l'aube 10. Les cavités E et F communiquent entre elles par une pluralité de passages 52 répartis dans la direction radiale le long de l'aube 10 entre ces deux cavités (figures 4B et 4D).

La cavité E communique avec la face d'intrados 22 de l'aube 10 via des orifices 50 répartis dans la direction radiale sur au moins une partie de cette cavité E. Ainsi, lorsque l'air froid s'écoule dans cette cavité, celui-ci échange de la chaleur par convection forcée avec la paroi séparant cette cavité de l'air chaud côté intrados, et est également évacué par les orifices 50, générant un film de refroidissement sur l'intrados de l'aube, tout en pénétrant également dans l'autre cavité via la pluralité de passages 52. L'air s'écoulant dans la cavité F est évacué par des orifices 54 répartis dans la direction radiale sur au moins une partie de cette cavité F.

Le troisième circuit de refroidissement 3, indépendant des premier et deuxième circuits de refroidissement 1 et 2, comporte une cavité d'extrados G adjacente aux cavités A, B et C, et une cavité de bord de fuite H s'étendant radialement à la fois du côté extrados 24 et du côté intrados 22 de l'aube du côté du bord de fuite 20. Les cavités G et H sont alimentées mutuellement en air froid par une ouverture d'admission d'air au niveau du pied d'aube 14.

La cavité d'extrados G s'étend d'une part radialement dans une première partie de cavité G', depuis le pied d'aube 14 jusqu'à la tête d'aube 16 le long de la face d'extrados 24, et s'étend d'autre part dans une direction sensiblement perpendiculaire à la direction radiale dans une deuxième partie de cavité G", le long de la baignoire 28, en formant un angle en direction bord de fuite 20 (figure 2), la deuxième partie de cavité G" permettant de refroidir la paroi transversale 26 au niveau du bord de fuite 2. En d'autres termes, la cavité G s'étend du pied d'aube 14 jusqu'au bord de fuite 20.

Par ailleurs, la première partie de cavité G' présente un rapport de forme élevé de sorte que, selon une section transversale (figures 4C et 4D par exemple), une dimension (longueur) est au moins trois supérieure à une autre dimension (largeur), lui donnant une forme « élancée », ou allongée. Cela permet de maximiser la surface d'échange entre l'air circulant dans la cavité G et la face d'extrados 24. Hormis la cavité de bord de fuite H, dont la forme est déterminée par la forme de l'aube 10 au niveau du bord de fuite 20, la cavité d'extrados G du troisième circuit de refroidissement 3 est la seule, sur l'ensemble des cavités que comporte l'aube 10, à présenter un tel rapport de forme. Le fait de limiter le nombre de cavités présentant de tels rapports de forme permet de faciliter le processus de fabrication de l'aube.

La cavité de bord de fuite H ne s'étend pas radialement sur toute la longueur de l'aube 10, et est limité en longueur par la deuxième partie de cavité G". Par ailleurs, Les cavités du troisième circuit de refroidissement 3 communiquent avec des orifices de bord de fuite 56 débouchant sur la face d'intrados 22 au niveau du bord de fuite 20, les orifices de bord de fuite 56 étant répartis radialement le long de l'aube 10. Ces orifices 56 permettent d'évacuer l'air froid circulant dans ces deux cavités.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, les nombres de circuits de refroidissement et de cavités composant chacun de ces circuits ne sont pas limités à ceux présentés dans cet exemple. Par conséquent, la description et les dessins doivent être considérés dans un sens illustratif plutôt que restrictif.

Il est également évident que toutes les caractéristiques décrites en référence à un procédé sont transposable, seules ou en combinaison, à un dispositif, et inversement, toutes les caractéristiques décrites en référence à un dispositif sont transposables, seules ou en combinaison, à un procédé.

## Revendications

1. Aube (10) de turbine aéronautique s'étendant dans la direction radiale et présentant un intrados (22) et un extrados (24), comportant une pluralité de cavités d'intrados (A, E, F) s'étendant radialement du côté intrados (22) de l'aube (10), une pluralité de cavités d'extrados (C, D, G) s'étendant radialement du côté extrados (24) de l'aube (10), et au moins une cavité centrale (B) située dans la partie centrale de l'aube (10) et entourée par des cavités d'intrados (A, E, F) et des cavités d'extrados (C, D, G), l'aube (10) comportant également une pluralité de circuits de refroidissement (1, 2, 3), dans laquelle au moins un premier circuit de refroidissement (1) comporte :
une première cavité (A) et une deuxième cavité (B), la première et la deuxième cavité communiquant entre elles au niveau d'une extrémité radiale interne (14) et d'une extrémité radiale externe (16) de l'aube (10),
une troisième cavité (C) communiquant avec la deuxième cavité (B) au niveau de l'extrémité radiale externe (16),
une quatrième cavité (D) communiquant avec la troisième cavité (C) au niveau de l'extrémité radiale interne (14),
la première cavité (A) et la deuxième cavité (B) étant configurées pour être alimentée conjointement en air froid par une ouverture commune d'admission d'air au niveau de l'extrémité radiale interne (14), et pour que l'air s'y écoule dans un même sens selon la direction radiale, la troisième cavité (C) et la quatrième cavité (D) étant des cavités d'extrados,
l'aube étant **caractérisée en ce que** la première cavité (A) est une cavité d'intrados, et la deuxième cavité (B) est une cavité centrale.

2. Aube (10) selon la revendication 1, comportant une pluralité d'orifices d'intrados (40), chacun communiquant avec la première cavité (A) et débouchant sur l'intrados (22) de l'aube (10).

3. Aube (10) selon la revendication 1 ou 2, comportant une pluralité d'orifices d'extrados (44), chacun communiquant avec la quatrième cavité (D) et débouchant sur l'extrados (24) de l'aube (10).

4. Aube (10) selon l'une quelconque des revendications 1 à 3, comportant au moins un deuxième circuit de refroidissement (2) comprenant deux cavités d'intrados (E, F) communiquant entre elles par une pluralité de passages (52) répartis dans la direction radiale le long de l'aube (10) entre ces deux cavités, une de ces deux cavités étant alimentée en air froid par une ouverture d'admission d'air au niveau de l'extrémité radiale interne (14) de l'aube (10).

5. Aube (10) selon l'une quelconque des revendications 1 à 4, comportant au moins un troisième circuit de refroidissement (3) comprenant une cavité d'extrados (G) et une cavité de bord de fuite (H) s'étendant radialement à la fois du côté extrados (24) et du côté intrados (22) de l'aube (10) au niveau du bord de fuite (20), les deux cavités étant alimentées en air froid par une ouverture d'admission d'air au niveau de l'extrémité radiale interne (14) de l'aube (10), la cavité d'extrados (G) formant un angle au niveau de l'extrémité radiale externe (16) de l'aube (10), de sorte à s'étendre jusqu'au bord de fuite (20) de l'aube (10).

6. Aube (10) selon l'une quelconque des revendications 1 à 5, dans laquelle la pluralité de circuits de refroidissement sont indépendants les uns des autres.

7. Aube (10) selon l'une quelconque des revendications 1 à 6, comportant moins de deux cavités fines, les cavités fines ayant une première longueur supérieure ou égale à au moins sept fois une deuxième longueur dans une section perpendiculaire à la direction radiale.

8. Turbine à gaz comportant des aubes selon l'une quelconque des revendications précédentes.

## Patentansprüche

1. Schaufel (10) einer Flugzeugturbine, die sich in der radialen Richtung erstreckt und eine Druckseite (22) und eine Saugseite (24) aufweist und mehrere druckseitige Hohlräume (A, E, F), die sich radial von der druckseitigen Seite (22) der Schaufel (10) erstrecken, mehrere saugseitige Hohlräume (C, D, G), die sich radial von der saugseitigen Seite (24) der Schaufel (10) erstrecken, und zumindest einen zentralen Hohlraum (B) umfasst, der sich in dem zentralen Teil der Schaufel (10) befindet und von den druckseitigen Hohlräumen (A, E, F) und den saugseitigen Hohlräumen (C, D, G) umgeben ist, wobei die Schaufel (10) auch mehrere Kühlkreise (1, 2, 3) beinhaltet, wobei zumindest ein erster Kühlkreis (1) beinhaltet:
einen ersten Hohlraum (A) und einen zweiten Hohlraum (B), wobei der erste und der zweite Hohlraum miteinander an einem inneren radialen Ende (14) und einem äußeren radialen Ende (16) der Schaufel (10) kommunizieren,
einen dritten Hohlraum (C), der mit dem zweiten Hohlraum (B) an dem äußeren radialen Ende (16) kommuniziert,
einen vierten Hohlraum (D), der mit dem dritten Hohlraum (C) an dem inneren radialen Ende (14) kommuniziert,
wobei der erste Hohlraum (A) und der zweite Hohlraum (B) dazu ausgestaltet sind, zusammen durch eine gemeinsame Lufteinlassöffnung an dem inneren radialen Ende (14) mit Kaltluft versorgt zu werden, und so, dass die Luft dort in dieselbe Richtung gemäß der radialen Richtung strömt, wobei der dritte Hohlraum (C) und der vierte Hohlraum (D) saugseitige Hohlräume sind,
wobei die Schaufel **dadurch gekennzeichnet ist, dass** der erste Hohlraum (A) ein druckseitiger Hohlraum ist und der zweite Hohlraum (B) ein zentraler Hohlraum ist.

2. Schaufel (10) nach Anspruch 1, die mehrere druckseitige Öffnungen (40) umfasst, wobei jede mit dem ersten Hohlraum (A) kommuniziert und auf der Druckseite (22) der Schaufel (10) mündet.

3. Schaufel (10) nach Anspruch 1 oder 2, die mehrere saugseitige Öffnungen (44) umfasst, wobei jede mit dem vierten Hohlraum (D) kommuniziert und auf der Saugseite (24) der Schaufel (10) mündet.

4. Schaufel (10) nach einem der Ansprüche 1 bis 3, die mindestens einen zweiten Kühlkreis (2) umfasst, der zwei druckseitige Hohlräume (E, F) umfasst, die miteinander über mehrere Durchgänge (52) kommunizieren, die in der radialen Richtung entlang der Schaufel (10) zwischen diesen zwei Hohlräumen verteilt sind, wobei einer dieser zwei Hohlräume durch eine Lufteinlassöffnung an dem inneren radialen Ende (14) der Schaufel (10) mit Kaltluft versorgt wird.

5. Schaufel (10) nach einem der Ansprüche 1 bis 4, die zumindest einen dritten Kühlkreis (3) umfasst, der einen saugseitigen Hohlraum (G) und einen Hohlraum an der Hinterkante (H) umfasst, der sich radial gleichzeitig von der saugseitigen Seite (24) und der druckseitigen Seite (22) der Schaufel (10) an der Hinterkante (20) erstreckt, wobei die zwei Hohlräume durch eine Lufteinlassöffnung an dem inneren radialen Ende (14) der Schaufel (10) mit Kaltluft versorgt werden, wobei der saugseitige Hohlraum (G) einen Winkel an dem äußeren radialen Ende (16) der Schaufel (10) auf solche Weise bildet, dass er sich bis zu der Hinterkante (20) der Schaufel (10) erstreckt.

6. Schaufel (10) nach einem der Ansprüche 1 bis 5, wobei die mehreren Kühlkreise voneinander unabhängig sind.

7. Schaufel (10) nach einem der Ansprüche 1 bis 6, die zumindest zwei schmale Hohlräume umfasst, wobei die schmalen Hohlräume eine erste Länge aufweisen, die größer oder gleich dem zumindest Siebenfachen einer zweiten Länge in einem Schnitt senkrecht auf die radiale Richtung ist.

8. Gasturbine, die Schaufeln nach einem der vorhergehenden Ansprüche beinhaltet.

## Claims

1. An aviation turbine blade (10) extending in the radial direction and presenting a pressure side (22) and a suction side (24), including a plurality of pressure side cavities (A, E, F) extending radially at the pressure side (22) of the blade (10), a plurality of suction side cavities (C, D, G) extending radially at the suction side (24) of the blade (10), and at least one central cavity (B) located in the central portion of the blade (10) and surrounded by pressure side cavities (A, E, F) and by suction side cavities (C, D, G), the blade (10) further including a plurality of cooling circuits (1, 2, 3), in which at least a first cooling circuit (1) comprises:
• a first cavity (A) and a second cavity (B), the first and second cavities communicating with each other at a radially inner end (14) and at a radially outer end (16) of the blade (10);
• a third cavity (C) communicating with the second cavity (B) at the radially outer end (16); and
• a fourth cavity (D) communicating with the third cavity (C) at the radially inner end (14);
the first and second cavities (A, B) being configured to be fed jointly with cold air through a common air intake opening at the radially inner end (14), and so that the air flows radially therein in a same direction, the third cavity (C) and the fourth cavity (D) being suction side cavities;
the blade being **characterized in that** the first cavity (A) is a pressure side cavity, and the second cavity (B) is a central cavity.

2. A blade (10) according to claim 1, including a plurality of pressure side orifices (40), each communicating with the first cavity (A) and opening out in the pressure side (22) of the blade (10).

3. A blade (10) according to claim 1 or claim 2, including a plurality of suction side orifices (44), each communicating with the fourth cavity (D) and opening out onto the suction side (24) of the blade (10).

4. A blade (10) according to any one of claims 1 to 3, including at least a second cooling circuit (2) including two pressure side cavities (E, F) communicating with each other via a plurality of passages (52) distributed in the radial direction along the blade (10) between the two cavities, one of the two cavities being fed with cold air via an air intake opening at the radially inner end (14) of the blade (10).

5. A blade (10) according to any one of claims 1 to 4, including at least a third cooling circuit (3) including a suction side cavity (G) and a trailing edge cavity (H) extending radially both on the suction side (24) and on the pressure side (22) of the blade (10) at the trailing edge (20), the two cavities being fed with cold air via an air intake opening at the radially inner end (14) of the blade (10), the suction side cavity (G) forming an angle at the radially outer end (16) of the blade (10), in such a manner as to extend until it reaches the trailing edge (20) of the blade (10).

6. A blade (10) according to any one of claims 1 to 5, wherein the plurality of cooling circuits are independent from one another.

7. A blade (10) according to any one of claims 1 to 6, including fewer than two thin cavities, where a thin cavity has a first length that is greater than or equal to at least seven times a second length in section perpendicular to the radial direction.

8. A gas turbine including blades according to any one of the preceding claims.
